# EUROPEAN PATENT SPECIFICATION

(11) **EP 0 822 756 B1**
(45) Date of publication and mention of the grant of the patent: **31.07.2002**
(21) Application number: 96913032.7
(22) Date of filing: 22.04.1996
(51) Int. Cl.: A23G 3/30

(54) **METHOD FOR MANUFACTURING CHEWING GUM**
VERFAHREN ZUR HERSTELLUNG VON KAUGUMMI
PROCEDE DE FABRICATION DE CHEWING-GUM

(30) Priority: 24.04.1995 US 427002
(43) Date of publication of application: 11.02.1998
(73) Proprietor: WM. WRIGLEY JR. COMPANY, Chicago Illinois 60611 (US)
(72) Inventor: BERNATZ, Kevin, J., Palos Heights, IL 60463 (US); CHAPDELAINE, Albert, H., Naperville, IL 60540 (US)
(74) Representative: Baverstock, Michael George Douglas
(86) International application number: US9605605
(87) International publication number: WO9633623

(56) References cited:
- US-A- 4 806 364
- US-A- 4 861 600

## Description

### BACKGROUND OF THE INVENTION

The present invention relates generally to chewing gum. More specifically, the present invention relates to methods for manufacturing chewing gum.

Chewing gum generally consists of a water insoluble gum base, a water soluble portion, and flavors. During the manufacturing process of chewing gum, the water insoluble gum base and soluble portions are mixed together in mixers and then typically extruded.

Usually, the gum base is manufactured with elastomers, elastomer plasticizers, softeners, resins, and fillers. During this step, the base is typically manufactured at high temperatures, usually 104 to 149 °C (220 to 300°F). This allows all of the ingredients to be incorporated together.

After the base has been mixed, the resultant base product is transferred to a container. In a typical process, the base is transferred to pans and then made into blocks. It is also known to cool the base with specific equipment to make pellets which may be either cylindrical or spherical. Usually the pellets are sized so as to comprise 0.5 to 2 grams per piece.

To manufacture chewing gum, the blocks of base or base pellets are then transferred to a gum manufacturing site. In a method of making chewing gum, the solid blocks or pellets are melted in appropriate mixing vessels at 93 to 121°C (200 to 250°F). This creates a molten base that can be added to a gum mixer, for example, a sigma blade mixer, along with gum softeners, syrups, sugars, sugar alcohols, and flavors to manufacture chewing gum. In such a device and in such a state, the base can be incorporated with the other gum ingredients to make chewing gum in 5 to 15 minutes.

However, in a number of processes or methods of making chewing gum, the base is not melted before being added to the gum mixer. In these methods, the base is typically added to the mixer as slabs, small chunks, pellets, or the like. One such chewing gum product is a non-tack chewing gum made with a non-tack base as described by *Comollo,* U.S. Patent No. 3,984,574.

In order to create such a chewing gum product, the base is not melted during the mixing process. Therefore, in order to mix the base with the other gum ingredients, the base, in pellet form, is smeared in the gum mixer. Typically, in an empty mixer, the non-molten base is smeared for 12 to 20 minutes prior to the addition of other gum ingredients. This is done to adequately soften the base to allow it to be incorporated into the gum formulation. Heretofore, it was believed that if the base was not softened and smeared for this length of time, the base would not be properly incorporated with the other chewing gum ingredients causing unincorporated base lumps in the resultant product.

Examples of patents that discuss chewing gum manufacturing processes and/or non-tack chewing gum include: 4,587,125; 4,806,364; 4,861,600; 5,085,872; 5,087,459; 5,178,889; 5,192,562; 5,266,336; and EP 0,176,237.

Although it is necessary to smear the base before the addition of other ingredients, unfortunately, the longer the chewing gum base is smeared, the tougher the resultant gum product. A need therefore exists for an improved method of using non-molten base to manufacture chewing gum.

### SUMMARY OF THE INVENTION

The present invention provides an improved method for manufacturing chewing gum. Surprisingly it has been found that pursuant to the method of the present invention, that non-molten base can be smeared for a reduced period of time before addition of other gum ingredients. This results in a softer chewing gum product that does not include base lumps.

To this end, the present invention provides a method for manufacturing chewing gum comprising the steps of: mixing in a mixer non-molten gum base with a pre-composition chosen from the group consisting of mixer heel and trim gum; adding to the mixer additional ingredients necessary to make a chewing gum product; mixing the non-molten base, the composition, and the additional ingredients; and discharging a chewing gum product.

In a preferred embodiment, the non-molten gum base is in pellet form.

In a preferred embodiment, the non-molten base and composition (mixer heel or trim gum) are not mixed for more than ten minutes before addition of the additional ingredients.

In a preferred embodiment, during the initial mixing step, at least some of the ingredients necessary to make a chewing gum are added to the non-molten gum base with the composition (mixer heel or trim gum).

In a preferred embodiment, the composition (mixer heel or trim gum) constitutes 5 to 10% of the chewing gum product.

In a preferred embodiment, the non-molten base is added to a mixer that already includes the composition (mixer heel or trim gum).

In a preferred embodiment, recycled gum is mixed with the non-molten gum base.

In a preferred embodiment, the non-molten base is smeared in the mixer before addition of the composition (mixer heel or trim gum).

In a preferred embodiment, the non-molten base and composition (mixer heel or trim gum) are mixed for not more than 7 minutes before the addition of the additional ingredients.

In a further preferred embodiment, a method for making chewing gum is provided comprising the steps of: adding to a mixer non-molten base and a gum product chosen from the group consisting of mixer heel and trim gum; mixing the non-molten base and gum product; adding to the non-molten base and gum product, during the mixing, ingredients necessary to make a chewing gum; and discharging a resultant chewing gum composition after less than 12 minutes of mixing.

In still another preferred embodiment, a method for reducing the mixing time required in a process for manufacturing chewing gum is provided comprising the step of adding to a non-molten base a gum product chosen from the group consisting of mixer heel and trim gum prior to mixing the non-molten base with all of the necessary ingredients to make a chewing gum product.

A further embodiment of the present invention refers to the use of a pre-composition chosen from the group consisting of mixer heel and trim gum in a process for manufacturing chewing gum in order to reduce the mixing time wherein the pre-composition is added to a non-molten base prior to mixing the non-molten base with all of the ingredients used to make the chewing gum.

An advantage of the present invention is that it provides an improved method for manufacturing chewing gum.

Another advantage of the present invention is that it provides an improved chewing gum product.

Still further, an advantage of the present invention is that it provides a chewing gum product that is softer than prior chewing gum products.

Additionally, an advantage of the present invention is that it provides a method of manufacturing chewing gum from non-molten base that reduces the mixing time.

Furthermore, an advantage of the present invention is that it provides an improved method for manufacturing a non-tack chewing gum.

Still further, an advantage of the present invention is that it provides a shorter mixing time for incorporating non-molten base into other chewing gum ingredients without causing unincorporated base lumps.

Additional features and advantages of the present invention are described in, and will be apparent from, the detailed description of the presently preferred embodiments.

### DETAILED DESCRIPTION OF THE PRESENTLY PREFERRED EMBODIMENTS

The present invention provides an improved method for manufacturing chewing gum. Specifically, the method is directed to incorporating non-molten base with other chewing gum ingredients in a mixer. Pursuant to the method of the present invention a reduced mixing time is achieved, without causing unincorporated base lumps. Additionally; a resultant chewing gum product is provided that is softer than products manufactured by prior art methods.

To this end, surprisingly the inventors have found that if "mixer heel" is added to the non-molten gum base and mixed therewith, the mixing time (base smearing time) can be reduced without creating base lumps. Preferably, the non-molten gum base and mixer heel are mixed together before addition of other chewing gum ingredients, e.g., softeners, syrups, etc.

As used herein, and in the claims, "mixer heel" refers to a chewing gum composition that is not further processed into a chewing gum product, for example, product from a previous batch, such as that which remains in the mixer from a previous batch. Rather than dumping such remaining product and disposing of same, it is used in the method of the present invention. However, it should be noted that the present invention can also be achieved utilizing "trim gum," i.e., reprocessed or recycled gum. Also it should be noted that the mixer heel or trim gum should be added before, during, or immediately after the base addition to promote the smearing of the non-molten gum base.

Surprisingly it has been found that chewing gum produced using a base smear time that is shorter than the typical gum base smear time of 12-20 minutes is softer than chewing gum produced with a longer smear time. Pursuant to the present invention a reduced base smear time can be used, e.g., 10 minutes or less and preferably, approximately 7 minutes or less, while still producing gum without base lumps.

Pursuant to the present invention, in an embodiment, base heel is allowed to remain in the mixer from a previous batch of chewing gum. Preferably, 5 to 10% of the last batch of chewing gum remains in the mixer as the base heel. For example, in a 680 kg (1500 pound) batch, this is 34 to 68 kg (75 to 150 pounds).

Non-molten base (base pellets) is then added to the mixer heel in the mixer. During the initial base smear, the mixer heel is mixed (smeared) with the base pellets. Using the method of the present invention, a reduced initial mixing period is used as compared to previous smearing mixing methods. For example, it has been found, in an embodiment, that not more than a seven minute mixing time is required in order to properly incorporate and mix the base pellets.

Preferably, the method of the present invention is used to produce a non-tack chewing gum. However, the method of the present invention can be used in the manufacture of a number of chewing gum products.

In this regard, chewing gum generally consists of a water insoluble gum base, a water soluble portion, and flavors.

The insoluble gum base generally comprises elastomers, resins, fats and oils, softeners, and inorganic fillers. The gum base may or may not include wax. The insoluble gum base can constitute 5 to 95 percent, by weight, of the chewing gum, more commonly, the gum base constitutes 10 to 50 percent of the gum, and in some preferred embodiments, 20 to 35 percent, by weight, of the chewing gum.

In an embodiment, the chewing gum base of the present invention contains 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of 10,000 to 95,000, isobutylene-isoprene copolymer (butyl elastomer), styrene-butadiene copolymers having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters, often called estergums, such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

In an embodiment, pursuant to the present invention, softeners/emulsifiers may include tallow, hydrogenated tallow, hydrogenated and partially hydrogenated vegetable oils, medium chain triglycerides, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. Waxes may include synthetic waxes, such as microcrystalline or paraffin waxes, or natural waxes, such as carnauba, beeswax, candelilla, or polyethylene wax. An example of a wax-free gum base is disclosed in U.S. Patent No. 5,286,500.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes.

The softeners, which are also known as plasticizers and plasticizing agents, generally constitute between 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners include both sugar and sugarless components. Bulk sweeteners typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, galactose and corn syrup solids, alone or in combination.

Sorbitol can be used as a sugarless sweetener. Additionally, sugarless sweeteners can include, but are not limited to, other sugar alcohols such as mannitol, lactitol, xylitol, hydrogenated starch hydrolysates and maltitol, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, and monellin, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Examples of low caloric bulking agents include: polydextrose; Raftilose, Raftilin; Fructooligosaccharides (NutraFlora);Palatinose oligosaccharide; Guar Gum Hydrolysate (Sun Fiber); or indigestible dextrin (Fibersol). However, other low calorie bulking agents can be used.

A variety of flavoring agents can be used. The flavor can be used in amounts of 0.1 to 15 weight percent of the gum, and preferably, 0.2 to 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen and anise. Artificial flavoring agents and components may also be used. Natural and artificial flavoring agents may be combined in any sensorially acceptable fashion.

The present invention, it is believed, can be used with a variety of processes for manufacturing chewing gum.

Chewing gum is generally manufactured by sequentially adding the various chewing gum ingredients to commercially available mixers known in the art. Pursuant to the present invention, non-molten gum base is added to mixer heel or trim gum. In an embodiment, the trim or recycle gum is added after smearing the non-molten base for a period of time; of not more than 10 minutes and preferably, not more than 7 minutes.

In an embodiment, after a base smearing period, during which non-molten base is mixed with mixer heel or trim gum, which period is less than typical smearing of non-molten base, other chewing gum ingredients are added. However, if desired, during the initial mixing step, some of the other chewing gum ingredients, such as sugar, can be added. Liquid softeners should not be added during the initial mixing, since this may lubricate the base and cause increased smearing time. After all of the ingredients have been thoroughly mixed, the chewing gum mass is discharged from the mixer and shaped into the desired form, such as by rolling into sheets and cutting into sticks, extruding into chunks, or casting into pellets.

By way of example, and not limitation, examples of the present invention will now be given:

### EXAMPLE

### Sample Preparation

The following formula was used to produce all the various examples set forth below:

| | % | Mix Time, Minutes |
|---|---|---|
| Pelletized Base | 21.1 | 0 |
| Recycle Gum | - | 7 or 12 |
| Glycerin | 1.3 | 7 or 12 |
| Corn Syrup | 13.0 | 7 or 12 |
| Lecithin | 0.3 | 7 or 12 |
| Sugar | 62.2 | 9 or 14 |
| Sorbitol | 0.7 | 10 or 15 |
| Encapsulated Sweeteners | 0.4 | 10 or 15 |
| Spearmint Flavor | 0.9 | 10 or 15 |
| | 100.0 | 18-23 Total Mix Time |

In each example, batch size was 567 kg (1250 pounds) of new ingredients. As indicated above, recycle gum 45 to 113 kg (100 to 250 pounds) was added at time 0, 7 minutes, or 12 minutes. For Examples 3-6, mixer heel of 32 to 68 kg (70 to 150 pounds) was added at time 0. The following is a description of the gum preparations made:

For examples 1 and 2, for comparison purposes, samples were made in a clean mixer without mixer heel with base smeared for 7 minutes. Example 1 had 45 kg (100 pounds) recycle gum added at 7 minutes and example 2 had an additional 45 kg (100 pounds) gum added with the base at 0 minutes to assist smearing. Both of these batches had unsmeared base pellets remaining at the end of the gum batch.

Example 3 had 32 kg (70 pounds) of mixer heel added with the base and smeared for 7 minutes. Recycle gum (45 kg (100 pounds)) was also added at 7 minutes. Fewer base pellets remained unsmeared than in examples 1 and 2.

For example 4, four batches of gum were made with about 68 kg (150 pounds) of mixer heel added with the base for smearing. Smearing was done for 7 minutes and 45 kg (100 pounds) of recycle gum was added at 7 minutes. The finished gum showed no unincorporated base pellets.

For examples 5 and 6, batches of gum were made with a 12 minutes smear time, 68 kg (150 pounds) mixer heel and 45 kg (100 pounds) recycle gum (Ex. 5) or 90 kg (200 pounds) of recycle gum (Ex. 6). Extremely good mixing was noted in these samples.

### RESULTS

Sensory evaluations of the examples showed that examples 1 and 2 were much firmer than the products of examples 3 and 4. Example 3 was slightly softer than example 4, but both 3 and 4 were much softer than examples 1 and 2. Examples 5 and 6 with the 12 minute mix were even firmer than examples 1 and 2.

These results show that the use of a mixer heel of 5 to 10% or 32 to 68 kg (70 to 150 pounds) in a 680 kg (1500 pound) batch of gum gives improved mixing of non-molten base and does not cause unincorporated base pellets. This allows for a shorter mixing time to yield a softer, more desirable product.

## Claims

1. A method for manufacturing chewing gum comprising the steps of:
mixing in a mixer non-molten gum base with a pre-composition chosen from the group consisting of mixer heel and trim gum;
adding to the mixer additional ingredients necessary to make a chewing gum product;
mixing the non-molten base, pre-composition, and additional ingredients; and
discharging a chewing gum product.

2. A method as claimed in Claim 1 wherein the non-molten gum base is in pellet form.

3. A method as claimed in Claim 1 or Claim 2 wherein the chewing gum is not mixed for more than eighteen minutes.

4. A method as claimed in any one of Claims 1 to 3 wherein at least some of the additional ingredients are added to the non-molten gum base and the pre-composition during an initial mixing step.

5. A method as claimed in any one of Claims 1 to 4 wherein the pre-composition comprises from 5 to 10 wt.% of the chewing gum.

6. A method as claimed in any one of Claims 1 to 5 wherein the non-molten base is added to the mixer that already includes the pre-composition.

7. A method as claimed in any one of Claims 1 to 6 wherein the pre-composition is recycled gum.

8. A method as claimed in any one of Claims 1 to 7 wherein the non-molten base is smeared in the mixer for a period of time before addition of the pre-composition.

9. A method as claimed in any one of Claims 1 to 8 wherein the non-molten base and pre-composition are mixed for not more than 7 minutes before addition of the additional ingredients.

10. A method as claimed in any one of Claims 1 to 8 wherein the pre-composition and non-molten base are not mixed before addition of the additional ingredients.

11. Use of a pre-composition chosen from the group consisting of mixer heel and trim gum in a process for manufacturing chewing gum in order to reduce the mixing time wherein the pre-composition is added to a non-molten base prior to mixing the non-molten base with all of the ingredients used to make the chewing gum.

## Patentansprüche

1. Verfahren zur Herstellung von Kaugummi, umfassend die Schritte von:
Mischen von nicht-geschmolzener Gummigrundlage mit einer Vorzusammensetzung, ausgewählt aus der Gruppe, bestehend aus Mischerrückstand und Gummibeschnitt in einem Mischer;
Zugeben weiterer, zur Herstellung eines Kaugummiprodukts notwendiger Bestandteile zu dem Mischer;
Mischen der nicht-geschmolzenen Grundlage, Vorzusammensetzung und zusätzlicher Bestandteile; und
Ausgeben eines Kaugummiprodukts.

2. Verfahren nach Anspruch 1, wobei die nicht-geschmolzene Gummigrundlage in Pelletform vorliegt.

3. Verfahren nach Anspruch 1 oder Anspruch 2, wobei das Kaugummi für nicht mehr als achtzehn Minuten vermischt wird.

4. Verfahren nach einem der Ansprüche 1 bis 3, wobei mindestens einige der zusätzlichen Bestandteile während eines Anfangsmischschritts zu der nicht-geschmolzenen Gummigrundlage und der Vorzusammensetzung gegeben werden.

5. Verfahren nach einem der Ansprüche 1 bis 4, wobei die Vorzusammensetzung 5 bis 10 Gew.-% des Kaugummis umfasst.

6. Verfahren nach einem der Ansprüche 1 bis 5, wobei die nicht-geschmolzene Grundlage zu dem Mischer gegeben wird, der bereits die Vorzusammensetzung einschließt.

7. Verfahren nach einem der Ansprüche 1 bis 6, wobei die Vorzusammensetzung wieder zurückgeführtes Gummi ist.

8. Verfahren nach einem der Ansprüche 1 bis 7, wobei die nicht-geschmolzene Grundlage in dem Mischer vor der Zugabe der Vorzusammensetzung für einen Zeitraum verschmiert wird.

9. Verfahren nach einem der Ansprüche 1 bis 8, wobei die nicht-geschmolzene Grundlage und Vorzusammensetzung vor der Zugabe der zusätzlichen Bestandteile für nicht mehr als 7 Minuten vermischt werden.

10. Verfahren nach einem der Ansprüche 1 bis 8, wobei die Vorzusammensetzung und nicht-geschmolzene Grundlage vor der Zugabe der zusätzlichen Bestandteile nicht vermischt werden.

11. Verwendung einer Vorzusammensetzung, ausgewählt aus der Gruppe, bestehend aus Mischerrückstand und Gummibeschnitt in einem Verfahren zur Herstellung von Kaugummi, um die Mischzeit zu verringern, wobei die Vorzusammensetzung vor dem Vermischen der nicht-geschmolzenen Grundlage mit allen zur Herstellung des Kaugummis verwendeten Bestandteilen zu einer nicht-geschmolzenen Grundlage gegeben wird.

## Revendications

1. Procédé de fabrication d'une gomme à mâcher, comprenant les étapes consistant à :
mélanger, dans un malaxeur, une base de gomme non fondue avec une pré-composition choisie dans l'ensemble constitué de reliquats du malaxeur et de découpes de gomme;
ajouter, dans le malaxeur, les ingrédients supplémentaires nécessaires à la fabrication d'un produit gomme à mâcher ;
mélanger la base non fondue, la pré-composition et les ingrédients supplémentaires ; et
soutirer un produit gomme à mâcher.

2. Procédé selon la revendication 1, dans lequel la base de gomme non fondue est sous la forme de granules.

3. Procédé selon la revendication 1 ou la revendication 2, dans lequel on ne mélange pas la gomme à mâcher pendant plus de dix-huit minutes.

4. Procédé selon l'une quelconque des revendications 1 à 3, dans lequel on ajoute au moins une partie des ingrédients supplémentaires à la base de gomme non fondue et à la pré-composition pendant une étape de mélange initial.

5. Procédé selon l'une quelconque des revendications 1 à 4, dans lequel la pré-composition constitue de 5 à 10 % en poids de la gomme à'mâcher.

6. Procédé selon l'une quelconque des revendications 1 à 5, dans lequel on ajoute la base non fondue dans le malaxeur qui contient déjà la pré-composition.

7. Procédé selon l'une quelconque des revendications 1 à 6, dans lequel la pré-composition est de la gomme recyclée.

8. Procédé selon l'une quelconque des revendications 1 à 7, dans lequel la base de gomme est étalée dans le malaxeur pendant un certain laps de temps avant l'addition de la pré-composition.

9. Procédé selon l'une quelconque des revendications 1 à 8, dans lequel on mélange la base non fondue et la pré-composition pendant pas plus de 7 minutes avant l'addition des ingrédients supplémentaires.

10. Procédé selon l'une quelconque des revendications 1 à 8, dans lequel on ne mélange pas la pré-composition et la base non fondue avant l'addition des ingrédients supplémentaires.

11. Utilisation d'une pré-composition choisie dans l'ensemble constitué de reliquats du malaxeur et de découpes de gomme dans un procédé de fabrication d'une gomme à mâcher de façon à réduire le temps de mélange, dans laquelle on ajoute la pré-composition à une base non fondue avant de mélanger la base non fondue avec tous les ingrédients utilisés pour fabriquer la gomme à mâcher.
